# EUROPÄISCHE PATENTSCHRIFT

(11) **EP 1 600 339 B1**
(45) Veröffentlichungstag und Bekanntmachung des Hinweises auf die Patenterteilung: **23.09.2009**
(21) Anmeldenummer: 05010114.6
(22) Anmeldetag: 10.05.2005
(51) Int. Cl.: B60R 21/06

(54) **Aufnahmevorrichtung für ein Sicherheitsnetz**
Receptacle for safety net arrangement
Dispositif de réception pour filet de sécurité

(30) Priorität: 25.05.2004 DE 202004008488 U
(43) Veröffentlichungstag der Anmeldung: 30.11.2005
(73) Patentinhaber: BOS GmbH & Co. KG, 73760 Ostfildern (DE)
(72) Erfinder: Beck, Gernot, 69151 Neckarsgemünd (DE)
(74) Vertreter: Rüger, Barthelt & Abel Patentanwälte

(56) Entgegenhaltungen:
- EP-A- 1 393 978
- EP-A1- 0 668 187
- DE-A1- 10 252 490
- DE-C1- 10 063 725
- DE-C1- 10 218 632
- DE-C1- 19 944 003
- US-A- 4 281 487

## Beschreibung

Die Erfindung betrifft eine Aufnahmevorrichtung für ein Sicherheitsnetz zum Schutz eines Fahrgastraumes von Kombi-PKWs gegenüber dem Laderaum gemäß dem Oberbegriff des Anspruchs 1.

Derartige Aufnahmevorrichtungen sind allgemein bekannt und weisen ein Gehäuse auf, das drehbar gelagert eine Wickelwelle aufnimmt, an der mit einer Längskante ein Sicherheitsnetz befestigt ist, das durch einen Schlitz in dem Gehäuse wahlweise ausziehbar oder in das Gehäuse einzufahren ist. Das Gehäuse weist an einem linken und rechten Ende Befestigungsabschnitte auf, die jeweils in eine in dem PKW ortsfeste Aufnahmeeinrichtung zur Fixierung des Gehäuses einzusetzen sind. In einer Gebrauchsposition der Aufnahmevorrichtung im Laderaum eines Kombi PKWs sind die Befestigungsabschnitte in der ortsfesten Aufnahmeeinrichtung verriegelt positioniert, so dass ein selbständiges oder unbeabsichtigtes Lösen verhindert ist. Die Befestigungsabschnitte sind fest an dem Gehäuse der Aufnahmevorrichtung vorgesehen, um das Gehäuse in der Gebrauchsposition zu halten und die Kräfte beim Aus- und Einfahren des Sicherheitsnetzes sowie etwaige Haltekräfte aufzunehmen, die beim Auffangen eines Gegenstandes durch das Sicherheitsnetz entstehen können.

Zum Schutz des Fahrgastinnenraumes ist erforderlich, dass bei einem Auffahrunfall der Schutz des Fahrgastes durch die Sicherheitsnetzanordnung gewährleistet ist. Dies ist bei den bisher bekannten Aufnahmevorrichtungen nicht oder nur bedingt gegeben. Bei einem Auffahrunfall wird die Karosserie des Fahrzeuges im Bereich der C-Säulen aufgeweitet. Gleichzeitig wird die Aufnahmevorrichtung entlang ihrer Längsachse gedehnt, wodurch ein Bruch zwischen dem Befestigungsabschnitt und dem Gehäuse oder dem Befestigungsabschnitt und der ortsfesten Aufnahme erfolgen kann. Dadurch kann ein infolge eines Auffahrunfalls gegen das Sicherheitsnetz geschleuderter Gegenstand aus dem Laderaum nicht oder nur bedingt zurückgehalten werden. Die erforderliche Schutzfunktion ist beeinträchtigt oder nicht gegeben.

Aus der DE 100 63 725 C1 ist ein Sicherheitsnetz für Kraftfahrzeuge bekannt. Dieses Sicherheitsnetz weist ein Gehäuse auf, in dem eine Wickelwelle drehbar gelagert ist, auf der das Trenn- oder Sicherheitsnetz aufwickelbar ist. Das Gehäuse ist mit Einrichtungen versehen, um das Gehäuse wahlweise mit der Rückseite der Rücksitzlehne verbinden oder davon lösen zu können. Hierzu sind an dem Gehäuse an beiden Stirnenden Haken vorhanden, die in Öffnungen der Rückseite eingreifen. Das Gehäuse selbst ist starr und insoweit nicht Energie erzehrend.

Aus der EP 0 668187 A1 ist eine Aufnahmevorrichtung geeignet für ein Sicherheitsnetz gemäß dem Oberbegriff des Anspruchs 1 bekannt.

Der Erfindung liegt deshalb die Aufgabe zugrunde, eine Aufnahmevorrichtung für ein Sicherheitsnetz zum Schutz eines Fahrgastraumes von Kombi-PKWs gegenüber dem Laderaum zu schaffen, die bei einem Auffahrunfall die Schutzfunktion erfüllt.

Diese Aufgabe wird erfindungsgemäß durch die Merkmale des Anspruchs 1 gelöst.

Die erfindungsgemäße Ausgestaltung der Aufnahmevorrichtung weist zumindest zwischen dem Gehäuse und einem Befestigungsabschnitt oder zwischen zumindest zwei Gehäuseabschnitten wenigstens in Achslängsrichtung des Gehäuses wirkende energieverzehrende Mittel auf. Dadurch wird ermöglicht, dass die Aufprallenergie in Verformungsarbeit umgesetzt wird und ein Bruch der Aufnahmevorrichtung beziehungsweise ein unkontrolliertes Lösen eines Befestigungsabschnittes von dem Gehäuse oder aus einer ortsfesten Aufnahmeeinrichtung oder ein Bruch zwischen dem Befestigungsabschnitt und dem Gehäuse verhindert. Dadurch verbleibt die Aufnahmevorrichtung in der im Gebrauchszustand vorgesehenen Position, wodurch die Schutzwirkung durch das Sicherheitsnetz vollständig erbracht wird. Die energieverzehrenden Mittel ermöglichen zumindest in Achslängsrichtung des Gehäuses einen Längenausgleich, wodurch das Aufweiten der C-Säule bei einem Aufprall des Fahrzeuges ausgeglichen wird.

Die energieverzehrenden Mittel umfassen zumindest ein Rastelement, das in eine Aufnahme eingreift und bei überschreiten einer vorbestimmmten Kraft zumindest in Achslängsrichtung des Gehäuses aus der Aufnahme freikommt, abreißt oder deformiert wird. Dadurch wird ermöglicht, dass ab einer bestimmten Aufprallenergie, die ein entsprechendes Aufweiten der Karosserie im Bereich der C-Säulen zur Folge hat, die energieverzehrenden Mittel zum Einsatz kommen, wodurch die Aufnahmevorrichtung entlang ihrer Längsachse dehnfähig oder längenaussgleichsfähig ist. Gleichzeitig nach dem Freikommen des Rastelementes aus der Aufnahmevorrichtung, dem Abreißen oder dem Deformieren ist vorteilhafterweise durch den Führungsabschnitt des Halters sichergestellt, dass der Halter den freien Endabschnitt des Gehäuses umgibt und/oder darin geführt ist, so dass ein vollständiges Lösen des Gehäuses vom Halter nicht gegeben ist. Ein Endabschnitt des Gehäuses ist somit längsverschieblich in dem Halter aufgenommen und bildet eine Art Schiebesitz. Das zumindest eine Rastelement ist bevorzugt an einem Halter vorgesehen, der in eine Aufnahme des Gehäuses eingreift. Ebenso kann das Rastelement an dem Gehäuse vorgesehen sein, das in eine Aufnahme des Halters eingreift. Bei mehreren Rastelementen kann auch eine beliebige Kombination vorgesehen sein.

Nach einer vorteilhaften Ausgestaltung der Erfindung ist vorgesehen, dass die energieverzehrenden Mittel an einem Halter vorgesehen sind, der an einem Endabschnitt des Gehäuses angreift und zunächst einen Befestigungsabschnitt umfasst. Diese Ausgestaltung weist den Vorteil auf, dass die herkömmlichen Gehäuse zur Aufnahme einer Wickelwelle und eines Sicherheitsnetzes eingesetzt werden können und die an den jeweiligen freien Enden des Gehäuses angeordneten Halter die energieverzehrenden Mittel umfassen.

Nach einer alternativen vorteilhaften Ausgestaltung der Erfindung ist vorgesehen, dass die energieverzehrenden Mittel an einem Gehäuse vorgesehen sind, an dessen Endabschnitten ein den Befestigungsabschnitt aufweisender Halter angreift. Diese Ausführungsform weist den Vorteil auf, dass ein einheitliches Gehäuse mit energieverzehrenden Mitteln vorgesehen ist, so dass ein einheitliches Gehäuse mit verschiedenen Haltern ausgestattet werden kann, um für unterschiedliche ortsfeste Aufnahmeeinrichtungen im Laderaum von Kombi-PKWs eingesetzt zu werden.

Nach einer weiteren alternativen vorteilhaften Ausgestaltung der Erfindung ist vorgesehen, dass die energieverzehrenden Mittel zwischen einem Befestigungsabschnitt und einem Gehäuseabschnitt des Halters vorgesehen sind. Dadurch können die Gehäuse zur Aufnahme der Wickelwelle ihre ursprüngliche Gestalt und Form beibehalten. Die Anpassung der energieverzehrenden Mittel kann in Abhängigkeit der Einbausituation erfolgen und angepasst sein. Die Befestigungsabschnitte und zumindest ein Gehäuseabschnitt des Halters werden zumeist für eine form- und/oder kraftschlüssige Verbindung zum lösbaren Anbringen der

Aufnahmevorrichtung ausgebildet, so dass die energieverzehrenden Mittel gleichzeitig bei der Anpassung integriert sind. Dadurch wird die Flexibilität der Modulbauweise erhöht.

Nach einer weiteren vorteilhaften Ausgestaltung der Erfindung ist vorgesehen, dass das zumindest eine Rastelement an dem Führungsabschnitt des Halters vorgesehen ist. Dadurch wird ermöglicht, dass nach dem Lösen des zumindest einen Rastelements aus der Aufnahme ein Endabschnitt des Gehäuses durch den Halter weiterhin umgeben wird und eine längsverschiebliche Ausgestaltung zur Aufnahme der zumindest kurzfristigen Aufweitung der C-Säulen annimmt.

Nach einer weiteren vorteilhaften Ausgestaltung der Erfindung ist vorgesehen, dass zumindest zwei Rastelemente in Achslängsrichtung des Gehäuses zueinander beabstandet vorgesehen sind, die in Abhängigkeit der einwirkenden Kraft nacheinander aus der Aufnahme freikommen, abreißen oder deformieren. Dadurch können die energieverzehrenden Mittel eine gestufte oder eine kontinuierlich zunehmende Kraft aufweisen, die dem Aufweiten der C-Säulen entgegenwirkt. Eine erhöhte Sicherheit zum Umsetzen der durch das Aufweiten wirkenden Kraft in Verformungsarbeiten ist ermöglicht. Die zumindest zwei Rastelemente können vorteilhafterweise in einer gemeinsamen Mittelebene oder versetzt zueinander vorgesehen sein.

Nach einer weiteren vorteilhaften Ausgestaltung der Erfindung ist vorgesehen, dass dem zumindest einen Rastelement zumindest ein Anschlag zugeordnet ist, der nach dem Freikommen des zumindest einen Rastelements aus der Aufnahme eine Endlage in Achslängsrichtung des zumindest einen Halters zum Gehäuse oder der Gehäuseabschnitte zueinander sichert. Dadurch wird ermöglicht, dass bei einer größeren Kraftteinwirkung auf die Aufnahmeeinrichtung, die einerseits durch das Aufweiten der C-Säulen erfolgt und andererseits durch ein gegebenenfalls erfolgendes Durchbiegen des Gehäuses aufgrund dem Zurückhalten eines gegen das Sicherheitsnetz geschleuderten Gegenstandes, die Schutzfunktion erfüllt wird. Dieser zumindest eine Anschlag sichert den Halter zum Gehäuse nach einem Auffahrunfall. Der Anschlag ist vorteilhafterweise in einer schlitzförmigen Ausnehmung geführt.

Der Halter ist nach einer bevorzugten Ausführungsform als Endstück ausgebildet, das mit seinem Führungsabschnitt das freie Ende des Gehäuses umgreift oder in dieses abschnittsweise eingreift, zumindest ein Rastelement und zumindest ein Anschlag aufweist, welche jeweils in einer Ausnehmung des Gehäuses eingreifen. Dadurch kann der Halter als Endkappe ausgebildet sein, welche durch Aufschieben in einfacher Weise zum Gehäuse positionierbar ist. Die Montage des Halters in die Endlage erfolgt in einfacher Weise durch Einrasten in einer Endlage, da sich während dem Aufschieben des Endstückes auf das Gehäuse die Rastelemente und der Anschlag aufweiten, um in einer Endposition in die Aufnahme einzugreifen. Die Aufweitung des Führungsabschnitts an dem Halter wird dadurch unterstützt, dass der Halter im Endabschnitt einen Schlitz umfasst, so dass der freie Endbereich eine Art C-förmigen Querschnitt oder einen an eine C-Form angenäherten Querschnitt aufweist. Analog ist auch möglich, dass der Halter den freien Endbereich des Gehäuses nicht umgreift, sondern in diesen eingreift. Dadurch kann die selbe Wirkung erzielt werden.

Nach einer weiteren vorteilhaften Ausgestaltung der Erfindung ist vorgesehen, dass der Halter, der als Endstück ausgebildet ist und zumindest ein Rastelement, das zumindest einen Anschlag und zumindest einen Befestigungsabschnitt umfasst, als Spritzgussteil aus Kunststoff, insbesondere einem schlagzähen Kunststoff, ausgebildet ist. Dadurch ist eine kostengünstige Herstellung ermöglicht. Gleichzeitig wird dadurch eine einfache Montage durch Aufschieben des Endstückes auf das Gehäuse ermöglicht. Alternativ kann der Halter auch als Gussteil oder druckgusssteil aus einer Gusslegierung, wie beispielsweise einer Aluminiumlegierung, hergestellt sein.

Vorteilhafterweise ist das Gehäuse als Strangpressprofil ausgebildet. Bevorzugt ist eine Leichtmetalllegierung vorgesehen, die insbesondere eine hohe Biegesteifigkeit aufweist. Dadurch weist das Gehäuse eine Eigensteifigkeit auf, die eine einfache geometrische Gestalt umfasst und ermöglicht, dass sich das Gehäuse vorteilhafterweise einteilig quer über die gesamte Fahrzeugbreite erstreckt.

Bevorzugt ist vorgesehen, dass die Lagerung der Wickelwelle in dem Gehäuse vorgesehen ist und das Lager vorzugsweise einen stirnseitigen Abschluss bildet. Dadurch kann eine Vorfertigung des Gehäuses mit der Bestückung der Wickelwelle, dem Sicherheitsnetz und einem Federmotor oder dergleichen vorgesehen sein. Der Federmotor wird beim Ausziehen des Sicherheitsnetzes vorgespannt, so dass eine Rückstellkraft das Aufwickeln des Rollos unterstützt oder selbständig vornimmt und das Sicherheitsnetz in einer aufgerollten Position hält. Die in dem Gehäuse angeordneten Bauteile bilden eine Baugruppe, die durch Bestückung von entsprechenden Haltern an verschiedene ortsfeste Aufnahmeeinrichtungen anpassbar sind.

Nach einer weiteren alternativen Ausgestaltung der Erfindung ist vorgesehen, dass energieverzehrende Mittel zumindest einen Deformationskörper umfassen. Diese Deformationskörper weisen den Vorteil auf, dass in Abhängigkeit der Aufweitung der C-Säulen eine Verformungsarbeit erfolgt.

Der Deformationskörper ist vorteilhafterweise zumindest als ein federelastisches Element ausgebildet. Dadurch kann der Halter unter Vorspannung zum Gehäuse positioniert sein, wobei im Falle eines Aufpralls ein Längenausgleich durch Verringerung des Weges des elastischen Elementes ermöglicht ist. Als federelastische Elemente können Federpakete, Einzelfedern, wie beispielsweise Spiralfedern, Tellerfedern, gummielastische Körper oder dergleichen, vorgesehen sein.

Nach einer alternativen Ausgestaltung des Deformationskörpers ist vorgesehen, dass dieser durch ein Rohr oder eine Hülse ausgebildet ist, die aus Kunststoff oder Metall hergestellt ist. Dieses Rohr oder die Hülse wirkt mit einem Angriffselement am Halter zusammen, welches das Rohr oder die Hülse deformiert. Beispielsweise können an einem Zugstab Vorsprünge als Angriffselemente vorhanden sein, die gegenüber einem Innendurchmesser des Rohrs oder der Hülse hervorstehen und zur Verrichtung der Verformungsarbeit ein Aufweiten des Rohres oder der Hülse bewirken.

Des Weiteren kann auch eine alternative Ausgestaltung vorgesehen sein, bei der der Deformationskörper als Rohr oder Hülse aus einem geschäumten Kunststoff, insbesondere aus geschäumten Metallen oder Metalllegierungen, ausgebildet ist. Diese Metallschäume können offen- oder geschlossenporig ausgebildet sein. Bevorzugt werden Schäume aus einer Aluminiumlegierung eingesetzt, die beispielsweise als Gusslegierung oder Knetlegierung hergestellt sind.

Nach einer weiteren alternativen Ausgestaltung der energieverzehrenden Mittel ist vorgesehen, dass eine oder mehrere Dehnelemente, insbesondere Dehnschrauben, eingesetzt werden, die zwischen einem Befestigungsabschnitt und einem freien Ende des Gehäuses angeordnet sind.

Diese Dehnelemente ermöglichen ebenfalls einen Längenausgleich beim Aufweiten der C-Säulen während eines Auffahrunfalls. Weitere dehnförmige Elemente können eingesetzt werden.

Nach einer weiteren alternativen Ausgestaltung von energieverzehrenden Mitteln ist der Einsatz eines Faltenbalges vorgesehen. Dieser Faltenbalg kann vorteilhafterweise weitgehend inkompressible Medien aufnehmen, um eine Dämpfung während der Dehnung oder Längenänderung der Aufnahmevorrichtung durchzuführen. Als weitgehend inkompressible Medien können sowohl flüssige, gelförmige als auch gasförmige Medien eingesetzt werden.

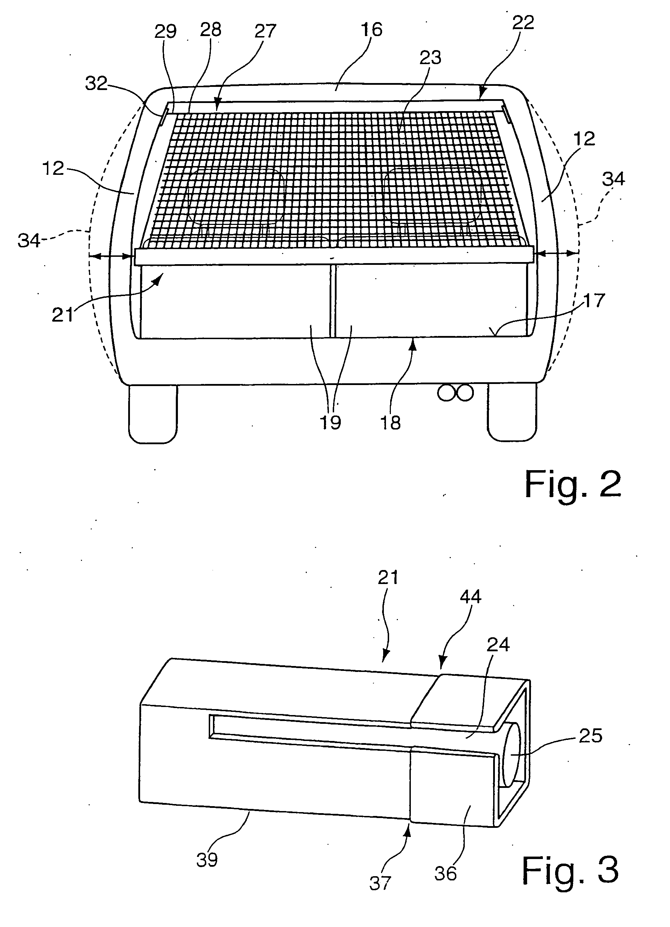

Die Erfindung sowie weitere vorteilhafte Ausführungsformen und Weiterbildungen derselben werden im Folgenden anhand den in den Zeichnungen dargestellten Beispielen näher beschrieben und erläutert. Die der Beschreibung und den Zeichnungen zu entnehmenden Merkmale können einzeln für sich oder zu mehreren in beliebiger Kombination erfindungssgemäß angewandt werden. Es zeigen:
eine perspektivische Darstellung einer Aufnahmevorrichtung für ein Sicherheitsnetz in einem Laderaum eines Kombi PKWs,
eine schematische Ansicht in einen Laderaum eines Kombi PKWs,
eine perspektivische Darstellung eines Endabschnittes der erfindungsgemäßen Aufnahmevorrichtung,
eine schematische Schnittdarstellung des Endabbschnittes gemäß Figur 3,
eine schematische Schnittdarstellung der erfindungsgemäßen Aufnahmevorrichtung gemäß Figur 3 nach einem Auffahrunfall,
eine schematische Schnittdarstellung einer alternativen Ausgestaltung einer Aufnahmevorrichtung gemäß Figur 3.

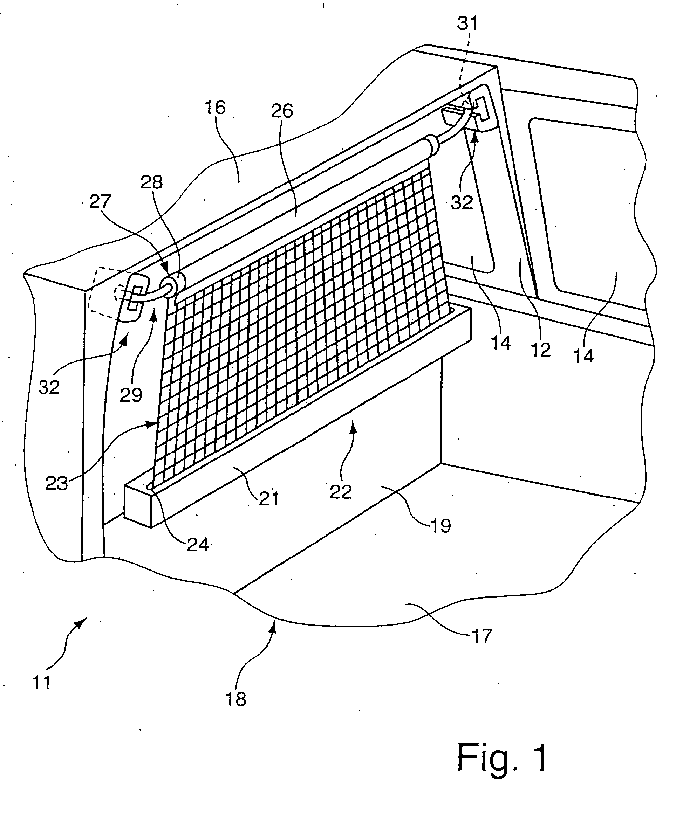

In Figur 1 ist ein Ausschnitt eines Heckbereiches 11 eines Kombi PKWs dargestellt. Der Heckbereich 11 ist seitlich durch jeweils eine C-Säulen 12 begrenzt, an welchem sich Fenster 14 anschließen. Im oberen Bereich der C-Säulen 12 schließt sich ein Dach 16 an. Im unteren Bereich der C-Säule 12 ist eine Ladefläche 17 vorgesehen. Ein Laderaum ist durch das Dach 16, die Ladefläche 17 sowie die C-Säulen 12 und einer Rücksitzbank 19 begrenzt. An einer Rückseite der Rücksitzbank 19 ist eine Aufnahmevorrichtung 21 für eine Sicherheitsnetzanordnung 22 angebracht. In dieser Aufnahmevorrichtung 21 ist eine Wickelwelle 25 (Figur 3) drehbar gelagert, an der mit einer Längskanten ein Sicherheitsnetz 23 befestigt ist, das durch einen Schlitz 24 in der Aufnahmevorrichtung 21 wahlweise herausziehbar beziehungsweise in die Aufnahmevorrichtung 21 einzufahren ist. Beim Einfahren des Sicherheitsnetzes 23 in die Aufnahmevorrichtung 21 ist vorgesehen, dass die Wickelwelle 25 mit Hilfe eines Federmotors in Aufwickelrichtung vorgespannt ist. Das Sicherheitsnetz 23 weist eine parallel zur Wickelwelle 25 laufende Vorderkante 26 auf, die beispielsweise über eine Schlaufe zur Befestigungseinrichtung 27 angeordnet ist. Die Befestigungseinrichtung 27 umfasst eine Zugstange 28 sowie jeweils zu deren Enden beidseitig angeordnete Halteglieder 29. Die Halteglieder 29 weisen an ihren freien Enden pilzförmige Köpfe 31 auf, die in Aufnahmen 32 einsetzbar sind. Die Aufnahmen 32 sind ortsfest im Übergangsbereich zwischen der C-Säulen 12 und dem Dach 16 angeordnet. In der in Figur 1 dargestellten ausgefahrenen Position des Sicherheitsnetzes 23 ist der Laderaum 18 durch das Sicherheitsnetz zum Innenraum der Insassen getrennt.

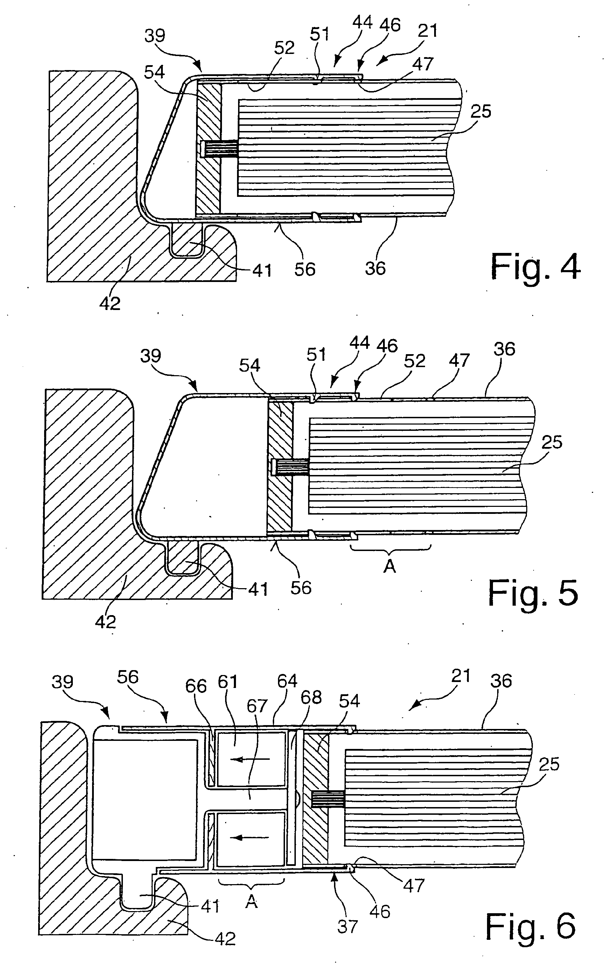

In Figur 2 ist eine Ansicht in den Laderaum 18 eines Kombi-PKWs dargestellt. Die Aufnahmevorrichtung 21 ist mit einem linken und rechten Ende jeweils an der den Enden zugeordneten C-Säulen 12 befestigt. Bei einem Auffahrunfall, insbesondere bei einem frontalen Aufprall eines Fahrzeugs auf einem Objekt, weiten sich die C-Säulen 12 auf, wie dies in Figur 2 gestrichelt durch die Linien 34 dargestellt ist. Während dem Aufweiten der C-Säulen 12 wirken Zugkräfte auf die Aufnahmevorrichtung 21. Zur Aufnahme dieser Zugkräfte und zum Längenausgleich ist die in den Figuren 3 bis 5 dargestellte erfindungsgemäße Aufnahmevorrichtung 21 und beispielhaft eine alternative Ausführungsform gemäß Figur 6 vorgesehen.

In Figur 3 ist eine schematische Ansicht der erfindungsgemäßen Aufnahmevorrichtung 21 dargestellt, die ein Gehäuse 36 umfasst, das an einem Endabschnitt 37 einen Halter 39 aufnimmt. Dieser Halter 39, der gemäß Figur 4 in einer Schnittdarstellung dargestellt ist, umfasst einen Befestigungsabschnitt 41, der an einer ortsfesten Aufnahmeeinrichtung 42 vorgesehen ist. Die ortsfeste Aufnahmeeinrichtung 42 ist im Bereich der C-Säulen 12 positioniert. Der Befestigungsabschnitt 41 ist bevorzugt durch eine nicht näher dargestellte Verriegelung in der Aufnahmeeinrichtung 42 lösbar fixiert. Der Halter 39 weist einen im Querschnitt an das Gehäuse 36 angepassten Querschnitt auf, der zum Umgreifen des Endabschnittes 37 des Gehäuses 36 ausgebildet ist. Der Halter 39 ist zur C-Säule 12 geschlossen ausgebildet und weist einen offenen Endbereich 44 zum Umgreifen des Gehäuses 12 auf. Zumindest in diesen Endbereich 44 erstreckt sich der Schlitz 24, so dass sich das Sicherheitsnetz 23 über die maximale Breite des Laderaumes 18 erstreckt.

Im Endbereich 44 des Halters 39 ist zumindest ein Rastelement 46 vorgesehen, das in einer Ausnehmung 47 angeordnet wird, sobald der Halter 39 lagerichtig auf dem freien Endabschnitt 37 des Gehäuses 36 positioniert ist. Zumindest diese Komponenten bilden in einer ersten Ausführungsform die energieverzehrenden Mittel. Der Endbereich 44 umfasst des Weiteren zumindest einen Anschlag 51, der in einer schlitzförmigen Ausnehmung 52 verschiebbar aufgenommen ist. Das Rastelement 46 und der Anschlag 51 sind in einem vorbestimmten Abstand zueinander angeordnet, der dem Abstand der Ausnehmung 47 von dem freien Endabschnitt 37 entspricht. Das zumindest eine Rastelement: 44 und/oder der zumindest eine Anschlag 51 können alternativ auch an eine Lasche im Führungsabschnitt 56 vorgesehen sein. Dadurch ist eine exakte Positionierung des Halters 39 als Endstück zum Gehäuse 36 gegeben. Ein Klappern oder geringfügiges Verschieben vom Gehäuse 36 zum Halter 39 ist dadurch verhindert.

In dem Gehäuse 36, das vorteilhafterweise als Strangpressprofil, insbesondere aus einer Aluminiumlegierung, hergestellt ist, befindet sich die Wickelwelle 25, die durch ein Lager 54 drehbar gehalten ist. Dieses Lager 54 bildet gleichzeitig vorteilhafterweise einen Abschluss zum Gehäuse 36. Der Außenumfang dieser Lagerscheibe entspricht bevorzugt dem Querschnitt des Gehäuses 36. Auf der Wickelwelle 25 ist das Sicherheitsnetz 23 auf- und abwickelbar vorgesehen.

In Figur 5 ist die Aufnahmevorrichtung 21 nach einem Auffahrunfall darrgestellt. Die C-Säulen 12 sind zumindest kurzfristig aufgeweitet worden oder aufgeweitet. Durch eine Verschiebung des Halters 39 gegenüber dem Gehäuse 36 in Achslängsrichtung des Gehäuses 36 ist ein Längenausgleich erfolgt. Der Halter 39 ist in einem Schiebesitz geführt, der durch einen Führungsabschnitt 56, die schlitzförmige Ausnehmung 52 und den Anschlag 51 ausgebildet ist. Nach überschreiten einer gewissen Kraft, die aufgrund der Aufweitung der C-Säulen 18 in die Aufnahmevorrichtung 22 eingeleitet wird, erfolgt ein Freikommen des zumindest einen Rastelementes 46 aus der Ausnehmung 47. Dadurch wird der Anschlag 51 durch den Führungsabschnitt in der schlitzförmigen Ausnehmung 52 des Gehäuses 36 verschiebbar zum Endabschnitt 37 geführt. Der Anschlag 51 weist eine senkrecht zur schlitzförmigen Ausnehmung 52 verlaufende Körperkante auf, die den maximalen Verschiebeweg zwischen Halter 39 und Gehäuse 36 beschränkt. Die Lange der schlitzförmigen Ausnehmung 52 ist derart ausgelegt, dass die maximal vorgesehene Aufweitung der C-Säulen 12 kompensiert wird.

Das zumindest eine Rastelement 46 kann alternativ zum Freikommen aus der Ausnehmung 47 abgeschert oder abgerissen werden. Alternativ kann vorgesehen sein, dass eine Deformierung erfolgt. Bevorzugt ist der Halter 39 als Spritzgussteil ausgebildet. Ebenso kann der Halter 39 aus einem Aluminiumdruckguss oder einem metallischen Gehäuse vorgesehen sein.

Durch das vollständige Umgreifen des Endabschnittes 37 des Gehäuses 36 durch den Halter 39 ist nach einem Auffahrunfall sichergestellt, dass die Aufnahmevorrichtung 21 oder Teile davon sich nicht lösen und die Funktion der Sicherheitsnetzanordnung 22 aufrechterhalten bleibt. Vorteilhafterweise ist vorgesehen, dass im Bereich des Schlitzes 24 der Halter 39 einen gekrümmten Verlauf aufweist, so dass die durch den Schlitz 24 gebildete Körperkante des Gehäuses 36 zumindest teilweise umgriffen wird. Dieser Bereich ist vorteilhafterweise wie eine Art teilweise Umbördelung vorgesehen. Dadurch kann eine zusätzliche Führung der Teile zueinander erzielt werden. Durch die Ausgestaltung des Halters 39, der auf den Endabschnitt 37 des Gehäuses 3.6 aufgesteckt ist, kann nach einem Schadensfall durch den Austausch des Halters 39 die Aufnahmevorrichtung 21 komplettiert und weiter verwendet werden.

In Figur 6 ist eine alternative Ausgestaltung der erfindungsgemäßen Aufnahmevorrichtung 21 gemäß Figur 3 dargestellt. Der Halter 39 weist als energieverzehrende Mittel einen Deformationskörper 61 auf. Durch diesen Deformationskörper 61 wird ein Längenausgleich A beim Aufweiten der C-Säulen 12 unter Beibehaltung der lagerichtigen Anordnung der Aufnahmevorrichtung 21 zum Laderaum 18 erzielt. Ein Halter 39, der mit seinem Befestigungsabschnitt 41 in der Aufnahmeeinrichtung 42 positioniert ist, wird zunächst mit einem hülsenförmigen Bauteil 64 bestückt. Dieses Bauteil 64 weist einen ringförmigen Abschnitt 66 auf, dessen Öffnung einen Zugstab 67 durchdringt, der an dem Halter 39 angeordnet ist. Dieser Zugstab 67 nimmt den Deformationskörper 61 auf. Im Anschluss daran wird ein scheibenförmiges Element 68 auf dem Zugstab 67 positioniert und fixiert. Im Anschluss daran wird der Halter 39 mit dem Bauteil 41 auf den Endabschnitt 37 des Gehäuses 36 aufgesteckt. Rastelemente 46 greifen in Ausnehmungen 47 des Gehäuses 36 ein und fixieren den Halter 39 in einer Endposition.

Beim Aufweiten der C-Säulen 12 erfolgt eine Einwirkung einer Kraft in Längsrichtung der Aufnahmevorrichtung 21, wodurch das scheibenförmige Element 68 auf den Deformationskörper 61 einwirkt, der durch den ringförmigen Abschnitt 66 als Widerlager in einer Position zum Gehäuse 36 gehalten ist. Der Halter 39 ist verschiebbar zum hülsenförmigen Bauteil 64 aufgenommen.

Nach einer ersten vorteilhaften Ausgestaltung des Deformationskörpers 61 ist vorgesehen, dass dieser als gummielastisches Ringelement ausgebildet ist. Dadurch ist ermöglicht, dass eine dehnfähige Aufnahmevorrichtung 21 ausgebildet ist, die selbständig in ihren Ausgangszustand zurückkehrt. Des Weiteren kann alternativ vorgesehen sein, dass der Deformationskörper 61 als Druckfeder oder Spiralfeder oder durch Tellerfederpakete oder dergleichen ausgebildet ist. Auch dadurch ist der Halter 39 längenausgleichsfähig und kann nach der erforderlichen Längserstreckung in seine Ausgangslage zurückkehren.

Des Weiteren kann alternativ vorgesehen sein, dass der Deformationskörper 61 durch kompressible Medien ausgebildet ist. Eine analoge Wirkung zu den vorgenannten Ausführungsvarianten wird erzielt. Des Weiteren kann alternativ vorgesehen sein, dass der Deformationskörper 61 aus irreversiblen energieverzehrenden Mitteln ausgebildet ist. Beispielsweise können geschäumte Metalllegierungen, insbesondere Leichtmetalllegierungen, eingesetzt werden. Besonders bevorzugt sind offen- oder geschlossenporige Gusslegierungen oder Knetlegierungen.

Der Deformationskörper 61 kann beispielsweise auch durch Dehnelemente, beispielsweise Dehnschrauben, ausgebildet sein. Der Aufbau zwischen dem Halter 39 und dem hülsenförmigen Bauteil 64 ist derart angepasst, dass auf die Dehnschrauben eine Zugwirkung aufgebracht wird.

In einer nicht näher dargestellten alternativen Ausführungsform einer erfindungsgemäßen Aufnahmevorrichtung ist vorgesehen, dass das Gehäuse aus zumindest zwei Gehäuseabschnitten besteht, wobei zwischen den zumindest zwei Gehäuseabschnitten ein Halter vorgesehen ist, der in Kombination mit den Gehäuseabschnitten energieverzehrende Mittel umfasst. Beispielsweise kann dieser Halter hülsenförmig ausgebildet sein und zumindest ein Rastelement 46 und vorzugsweise einen Anschlag 51 analog dem Endabschnitt 44 des Halters 39 aufweisen, die an einem Endabschnitt 37 des Gehäuseabschnittes angreifen oder spiegelsymmetrisch ausgebildet sind, so dass jeweils an einem Endabschnitt der einander zugeordneten Gehäuseabschnitte die Rastelemente und vorzugsweise Anschläge eines Halters angreifen. Diese Ausgestaltung kann auch in Kombination mit den in den Figuren 3 bis 6 dargestellten Ausführungssformen vorgesehen sein.

Die in den Ausführungsbeispielen beschriebenen Merkmale sind jeweils für sich erfindungswesentlich und können beliebig miteinander kombinierbar sein.

## Patentansprüche

1. Aufnahmevorrichtung für ein Sicherheitsnetz (23) zum Schutz eines Fahrgastraumes von Kombi-PKWs gegenüber einem Laderaum (18),
mit einem Gehäuse (36), das eine drehbar gelagerte Wickelwelle (25) aufnimmt, an der mit einer Längskante ein Sicherheitsnetz (23) befestigt ist, das durch einen Schlitz (24) im Gehäuse (36) wahlweise auszieh bar oder in das Gehäuse einzufahren ist, und
mit wenigstens zwei an dem Gehäuse (36) angeordneten Befestigungsabschnitten (41), die jeweils in eine in dem PKW ortsfeste Aufnahmeeinrichtung (42) einzusetzen sind, **dadurch gekennzeichnet,**
**dass** zumindest zwischen dem Gehäuse (36) und zumindest einem Befestigungsabschnitt (41) oder zwischen zwei ein Gehäuse (36) bildenden Gehäuseabschnitten wenigstens ein in Achslängsrichtung des Gehäuses (36) wirkendes energieverzehrendes Mittel vorgesehen ist und
**dass** das energieverzehrende Mittel als zumindest ein Rastelement (46) ausgebildet ist und in zumindest eine Aufnahme (47) eingreift, das bei überschreiten einer vorbestimmten Kraft, die entlang der Längsachse des Gehäuses (36) wirkt, von der zumindest einen Aufnahme (47) freikommt, abreißt oder deformiert wird.

2. Aufnahmevorrichtung nach Anspruch 1, **dadurch gekennzeichnet, dass** das energieverzehrende Mittel an einem Halter (39) vorgesehen ist, der an einem Endabschnitt (37) des Gehäuses (36) angeordnet ist und zumindest einen Befestigungsabschnitt (41) aufweist.

3. Aufnahmevorrichtung nach Anspruch 1, **dadurch gekennzeichnet, dass** das energieverzehrende Mittel an einem Gehäuse (36) vorgesehen ist, an dessen Endabschnitt (37) ein den zumindest einen Befestigungsabschnitt (41) aufweisender Halter (39) angreift.

4. Aufnahmevorrichtung nach Anspruch 1, **dadurch gekennzeichnet, dass** das energieverzehrende Mittel zwischen einem Befestigungsabschnitt (41) und einem Gehäuseabschnitt des Halters (39) vorgesehen ist.

5. Aufnahmevorrichtung nach einem der vorhergehenden Ansprüche, **dadurch gekennzeichnet, dass** der Halter (39) einen Führungsabschnitt (56) aufweist, der einen freien Endabschnitt (37) des Gehäuses (36) umgreift oder in diesen eingreift und mit dem Gehäuse (36) einen Schiebesitz bildet.

6. Aufnahmevorrichtung nach Anspruch 5, **dadurch gekennzeichnet, dass** das zumindest eine Rastelement (46) am Führungsabschnitt (56) vorgesehen ist.

7. Aufnahmevorrichtung nach Anspruch 1, **dadurch gekennzeichnet, dass** in Achslängsrichtung des Gehäuses (36) zueinander beabstandet zumindest zwei Rastelemente (46) vorgesehen sind.

8. Aufnahmevorrichtung nach Anspruch 7, **dadurch gekennzeichnet, dass** die zumindest zwei Rastelemente (46) in der gemeinsamen Mittelebene oder versetzt zueinander angeordnet sind.

9. Aufnahmevorrichtung nach Anspruch 1, **dadurch gekennzeichnet, dass** dem zumindest einen Rastelement (46) zumindest ein Anschlag (51) zugeordnet ist, der nach dem Freikommen, Abreißen oder Deformieren des zumindest einen Rastelementes (46) eine Endlage des Halters (39) zum Gehäuse (36) oder der Gehäuseabschnitte sichert.

10. Aufnahmevorrichtung nach Anspruch 2, **dadurch gekennzeichnet, dass** der Halter (39) als Endstück ausgebildet ist und den freien Endabschnitt (37) des Gehäuses (36) umgreift oder in diesen zumindest abschnittsweise eingreift und dass zumindest ein Rastelement (46) in einer Aufnahme (47) des Gehäuses (36) und der zumindest eine Anschlag (51) in zumindest einer Ausnehmung (52) des Gehäuses (36) positioniert sind.

11. Aufnahmevorrichtung nach Anspruch 10, **dadurch gekennzeichnet, dass** der Anschlag (51) des Halters (39) in einer schlitzzförmigen Ausnehmung (52) des Gehäuses (36) geführt ist.

12. Aufnahmevorrichtung nach Anspruch 2, **dadurch gekennzeichnet, dass** der als Endstück ausgebildete Halter (39) zumindest ein Rastelement (46), einen Anschlag (51) und einen Befestigungsabschnitt (41) aufweist und als Spritzgussteil aus Kunststoff oder aus einer Gusslegierung ausgebildet ist.

13. Aufnahmevorrichtung nach Anspruch 1, **dadurch gekennzeichnet, dass** das Gehäuse (36) als Strangpressprofil ausgebildet ist.

14. Aufnahmevorrichtung nach Anspruch 1, **dadurch gekennzeichnet, dass** ein Lager (54) der Wickelwelle (25) in dem Gehäuse (36) vorgesehen ist und vorzugsweise einen stirnseitigen Abschluss des Gehäuses (36) bildet.

15. Aufnahmevorrichtung nach Anspruch 1, **dadurch gekennzeichnet, dass** das energieverzehrende Mittel einen Deformationskörper (61) umfasst.

16. Aufnahmevorrichtung nach Anspruch 15, **dadurch gekennzeichnet, dass** der Deformationskörper (61) zumindest ein federelastisches oder gummielastisches Element umfasst.

17. Aufnahmevorrichtung nach Anspruch 15, **dadurch gekennzeichnet, dass** der Deformationskörper (61) als ein Rohr oder eine Hülse ausgebildet ist, an dem ein Angriffselement des Halters (39) angreift oder eingreift.

18. Aufnahmevorrichtung nach Anspruch 15, **dadurch gekennzeichnet, dass** der Deformationskörper (61) durch einen geschäumten Kunststoff, insbesondere aus einem geschäumten Metall oder einer geschäumten Metalllegierung, hergestellt ist.

19. Aufnahmevorrichtung nach Anspruch 1, **dadurch gekennzeichnet, dass** das energieverzehrende Mittel eine oder mehrere Dehnelemente, insbesondere Dehnschrauben, umfasst, die zwischen einem Befestigungsabschnitt (41) und einem Endabschnitt (37) des Gehäuses (36) vorgesehen sind.

20. Aufnahmevorrichtung nach Anspruch 1, **dadurch gekennzeichnet, dass** das energieverzehrende Mittel als Faltenbalg ausgebildet ist, der zwischen einem Endabschnitt (37) des Gehäuses (36) und dem Befestigungsabschnitt (41) vorgesehen ist.

21. Aufnahmevorrichtung nach Anspruch 20, **dadurch gekennzeichnet, dass** der Faltenbalg ein weitgehend inkompressibles Medium umfasst.

## Claims

1. Receiving device for a safety mesh (23) to protect a passenger compartment from a luggage area (18) in estate cars,
with a housing (36), which receives a rotatably disposed winding shaft (25), to which a safety mesh (23), which can be selectively extended through a slot (24) in the housing (36) or retracted into the housing, is fastened at a longitudinal edge, and with at least two fastening sections (41), which are arranged on the housing (36) and are each to be inserted into a receiving means (42) locally fixed in the car,
**characterised in that**
at least one energy-dissipating means acting in axial longitudinal direction of the housing (36) is provided at least between the housing (36) and at least one fastening section (41) or between two housing sections forming a housing (36), and
that the energy-dissipating means is configured as at least one catch element (46) and engages into at least one recess (47) and separates from the at least one recess (47), tears off or is deformed when a predetermined force acting along the longitudinal axis of the housing (36) is exceeded.

2. Receiving device according to claim 1, **characterised in that** the energy-dissipating means is provided on a holder (39), which is arranged on an end section (37) of the housing (16) and has at least one fastening section (41).

3. Receiving device according to claim 1, **characterised in that** the energy-dissipating means is provided on a housing (36), onto the end section (37) of which a holder (39) having at least one fastening section (41) grips.

4. Receiving device according to claim 1, **characterised in that** the energy-dissipating means is provided between a fastening section (41) and a housing section of the holder (39).

5. Receiving device according to one of the preceding claims, **characterised in that** the holder (39) has a guide section (56), which engages around a free end section (37) of the housing (36) or engages into this and forms a sliding seat with the housing (36).

6. Receiving device according to claim 5, **characterised in that** the at least one catch element (46) is provided on the guide section (56).

7. Receiving device according to claim 1, **characterised in that** at least two catch elements (46) are provided spaced from one another in the axial longitudinal direction of the housing (36).

8. Receiving device according to claim 7, **characterised in that** the at least two catch elements (46) are arranged in the common central place or offset in relation to one another.

9. Receiving device according to claim 1, **characterised in that** the at least one catch element (46) has at least one associated stop (51), which after the separation, tearing off or deformation of the at least one catch element (46) secures an end position of the holder (39) relative to the housing (36) or the housing sections.

10. Receiving device according to claim 2, **characterised in that** the holder (39) is configured as an end piece and engages around the free end section (37) of the housing (36) or engages into this, at least in sections, and that at least one catch element (46) is positioned in a recess (47) of the housing (36) and the at least one stop (51) is positioned in at least one recess (52) of the housing (36).

11. Receiving device according to claim 10, **characterised in that** the stop (51) of the holder (39) is guided in a slot-shaped recess (52) of the housing (36).

12. Receiving device according to claim 2, **characterised in that** the holder (39) configured as end piece has at least one catch element (46), a stop (51) and a fastening section (41), and is configured as an injection moulding made of plastic or a casting alloy.

13. Receiving device according to claim 1, **characterised in that** the housing (36) is configured as an extruded profile.

14. Receiving device according to claim 1, **characterised in that** a bearing (54) of the winding shaft (25) is provided in the housing (36) and preferably forms a front closure of the housing (36).

15. Receiving device according to claim 1, **characterised in that** the energy-dissipating means comprises a deformation body (61).

16. Receiving device according to claim 15, **characterised in that** the deformation body (61) comprises at least one resilient or elastic element.

17. Receiving device according to claim 15, **characterised in that** the deformation body (61) is configured as a tube or sleeve, on which a gripping element of the holder (39) grips or engages.

18. Receiving device according to claim 15, **characterised in that** the deformation body (61) is made from a foamed plastic, in particular from a foamed metal or a foamed metal alloy.

19. Receiving device according to claim 1, **characterised in that** the energy-dissipating means comprises one or more expansion elements, in particular expansion bolts, which are provided between a fastening section (41) and an end section (37) of the housing (36).

20. Receiving device according to claim 1, **characterised in that** the energy-dissipating means is configured as a bellows arrangement provided between an end section (37) of the housing (36) and the fastening section (41).

21. Receiving device according to claim 20, **characterised in that** the bellows arrangement comprises a substantially incompressible medium.

## Revendications

1. Dispositif de réception pour un filet de sécurité (23) destiné à protéger un compartiment passagers de voitures particulières break par rapport à un compartiment de chargement (18), comprenant un boîtier (36) recevant un arbre d'enroulement (25) qui est monté à rotation et auquel est fixé, par un bord longitudinal, un filet de sécurité (23) qui, à travers une fente (24) ménagée dans le boîtier (36), peut être sorti ou rentré dans le boîtier à volonté, et comprenant au moins deux portions de fixation (41) disposées sur le boîtier (36) et destinées chacune à être insérées dans un système de réception (42) solidaire de la voiture particulière, **caractérisé en ce qu'**au moins entre le boîtier (36) et au moins une portion de fixation (41) ou entre deux portions de boîtier formant un boîtier (36) est prévu au moins un moyen consommateur d'énergie agissant dans la direction longitudinale axiale du boîtier (36), et **en ce que** le moyen consommateur d'énergie est conformé en au moins un élément d'encliquetage (46), pénètre dans au moins un logement (47) et, en cas de surpassement d'une force prédéterminée agissant suivant l'axe longitudinal du boîtier (36), sort du logement (47) au nombre d'au moins un, est arraché ou est déformé.

2. Dispositif de réception selon la revendication 1, **caractérisé en ce que** le moyen consommateur d'énergie est prévu sur un support (39) qui est disposé sur une portion d'extrémité (37) du boîtier (36) et qui comporte au moins une portion de fixation (41).

3. Dispositif de réception selon la revendication 1, **caractérisé en ce que** le moyen consommateur d'énergie est prévu sur un boîtier (36), sur la portion d'extrémité (37) duquel agit un support (39) comportant au moins une portion de fixation (41).

4. Dispositif de réception selon la revendication 1, **caractérisé en ce que** le moyen consommateur d'énergie est prévu entre une portion de fixation (41) et une portion de boîtier du support (39).

5. Dispositif de réception selon une des revendications précédentes, **caractérisé en ce que** le support (39) comporte une portion de guidage (56) qui entoure une portion d'extrémité libre (37) du boîtier (36) ou s'y engage et crée avec le boîtier (36) un ajustement coulissant.

6. Dispositif de réception selon la revendication 5, **caractérisé en ce que** l'élément d'encliquetage (46) au nombre d'au moins un est prévu sur la portion de guidage (56).

7. Dispositif de réception selon la revendication 1, **caractérisé en ce qu'**au moins deux éléments d'encliquetage (46) sont prévus à distance l'un de l'autre dans la direction longitudinale axiale du boîtier (36).

8. Dispositif de réception selon la revendication 7, **caractérisé en ce que** les éléments d'encliquetage (46) au nombre d'au moins deux sont disposés dans le plan médian commun ou avec un décalage l'un par rapport à l'autre.

9. Dispositif de réception selon la revendication 1, **caractérisé en ce qu'**à l'élément d'encliquetage (46) au nombre d'au moins un est associée au moins une butée (51) qui, après sortie, arrachement ou déformation de l'élément d'encliquetage (46) au nombre d'au moins un, garantit une position extrême du support (39) par rapport au boîtier (36) ou des portions de boîtier.

10. Dispositif de réception selon la revendication 2, **caractérisé en ce que** le support (39) est conformé en pièce d'extrémité et entoure la portion d'extrémité libre (37) du boîtier (36) ou s'engage au moins par endroits dans celle-ci, et **en ce qu'**au moins un élément d'encliquetage (46) est positionné dans un logement (47) du boîtier (36), et la butée (51) au nombre d'au moins une (51) est positionnée dans au moins un évidement (52) du boîtier (36).

11. Dispositif de réception selon la revendication 10, **caractérisé en ce que** la butée (51) du support (39) est guidée dans un évidement en forme de fente (52) du boîtier (36).

12. Dispositif de réception selon la revendication 2, **caractérisé en ce que** le support (39) conformé en pièce d'extrémité comporte au moins un élément d'encliquetage (46), une butée (51) et une portion de fixation (41) et est conformé en pièce moulée par injection en matière plastique ou en alliage moulé.

13. Dispositif de réception selon la revendication 1, **caractérisé en ce que** le boîtier (36) est conformé en profilé extrudé.

14. Dispositif de réception selon la revendication 1, **caractérisé en ce qu'**un palier (54) de l'arbre d'enroulement (25) est prévu dans le boîtier (36) et forme de préférence un moyen de fermeture frontal du boîtier (36).

15. Dispositif de réception selon la revendication 1, **caractérisé en ce que** le moyen consommateur d'énergie comprend un corps de déformation (61).

16. Dispositif de réception selon la revendication 15, **caractérisé en ce que** le corps de déformation (61) comprend au moins un élément possédant l'élasticité d'un ressort ou du caoutchouc.

17. Dispositif de réception selon la revendication 15, **caractérisé en ce que** le corps de déformation (61) est conformé en tube ou en manchon sur lequel agit ou dans lequel pénètre un élément actif du support (39).

18. Dispositif de réception selon la revendication 15, **caractérisé en ce que** le corps de déformation (61) est réalisé en matière plastique expansée, en particulier en métal expansé ou en alliage métallique expansé.

19. Dispositif de réception selon la revendication 1, **caractérisé en ce que** le moyen consommateur d'énergie comprend un ou plusieurs éléments d'extension, en particulier vis d'extension, qui sont prévus entre une portion de fixation (41) et une portion d'extrémité (37) du boîtier (36).

20. Dispositif de réception selon la revendication 1, **caractérisé en ce que** le moyen consommateur d'énergie est conformé en soufflet plissé, lequel est prévu entre une portion d'extrémité (37) du boîtier (36) et la portion de fixation (41).

21. Dispositif de réception selon la revendication 20, **caractérisé en ce que** le soufflet plissé renferme un agent en grande partie incompressible.
